# EUROPÄISCHE PATENTSCHRIFT

(11) **EP 0 343 390 B1**
(45) Veröffentlichungstag und Bekanntmachung des Hinweises auf die Patenterteilung: **23.08.1995**
(21) Anmeldenummer: 89107513.7
(22) Anmeldetag: 26.04.1989
(51) Int. Cl.: H01H 73/00, H01H 51/06, H02H 7/22

(54) **Motorstarter mit Kurzschlussschutz**
Motor starter with protection against short-circuit
Démarreur de moteur avec protection contre court-circuit

(30) Priorität: 24.05.1988 DE 3817528
(43) Veröffentlichungstag der Anmeldung: 29.11.1989
(73) Patentinhaber: Licentia Patent-Verwaltungs-GmbH, 60596 Frankfurt (DE)
(72) Erfinder: Meyer, Herbert, Dr. Ing., D-2350 Neumünster (DE)
(74) Vertreter: Vogl, Leo, Dipl.-Ing.

(56) Entgegenhaltungen:
- DE-A- 3 432 476
- DE-B- 1 192 731
- US-A- 3 717 792

## Beschreibung

Die Erfindung betrifft einen Motorstarter zum Ingang- und Stillsetzen von Elektromotoren gemäß dem Oberbegriff des Anspruchs 1.

Motorstarter mit Kurzschlußschutz sind als "kombinierte Starter" bekannt. Bei diesen Startern wird einem Schütz, mit dem der Motor im Normalbetrieb gesteuert wird, ein Leistungsschalter vorgeschaltet, der beim Auftreten von Kurzschlußströmen schnell genug den Strompfad trennt und so den zu steuernden Verbraucher und die anderen Schaltgeräte des Starters schützt. Die dabei zu leistende Lichtbogenarbeit der Kurzschlußstromtrennung wird allein von dem Leistungsschalter der Starterkombination geleistet. Die bekannten kombinierten Starter weisen einen engen Einsatzbereich auf, müssen mit einzelnen Schaltgeräten vom Anwender koordiniert und aufgebaut werden und bestehen aus mehreren unterschiedlichen Schaltgerätetypen und zusätzlichen Hilfsgeräten wie Sicherungen oder Überstromrelais. Mögliche Ausführungen derartiger Starter sind in einem Entwurf der DIN/VDE 0660 Teil 102 dargestellt.

Ein Starter gemäß dem Oberbegriff des Anspruchs 1 ist beispielsweise aus der DE-A- 34 32 476 bekannt. Er weist einen Schalterschütz mit einer Reihenschaltung von Nennstrom- und Überstromkontakten auf, denen jeweils ein Auslöser zugeordnet ist.

Weiterhin ist z.Bsp. aus der DE 35 03 431 A1 ein Schütz bekannt, das als Einzelgerät Kurzschlußschutzeigenschaften besitzt. Damit im Kurzschlußfall ein sicheres Abheben der beweglichen Kontaktbrücke erreicht wird, muß bei diesem Schütz ein magnetischer Ausgleicher, der den in dem Kontaktsystem auftretenden elektrodynamischen Abstoßungskräften entgegenwirkt, mit einer Freigabevorrichtung ausgerüstet sein, die bei einer bestimmten Stromschwelle ein schnelles und eindeutiges Öffnen der Kontakte ermöglicht. Zusätzlich müssen noch Dämpfungsmittel vorgesehen sein, die ein vorzeitiges Rückfallen der Kontaktbrücke innerhalb der 1. Halbwelle des Kurzschlußstromes verhindern.

Reihenschaltungen von Trennstellen, bei denen im Kurzschlußfall die zu leistende Lichtbogenarbeit auf mehrere Trennstellen verteilt wird, sind z. Bsp. aus der DE-AS 11 92 731 bekannt. Dort wird ein Selbstschalter gezeigt, dem ein Kontaktsystem vorgeschaltet ist, das die gleichen Trenneigenschaften wie das Kontaktsystem des Selbstschalters besitzt, und als Bauteil, bestehend aus Kontakttrennstelle, Auslöseeinheit und Eingangsklemmen, dem Selbstschalter beigeordnet werden kann. Dabei sind zwischen dem Selbstschalter und dem Bauteil nur elektrische Verbindungen erforderlich.

Der Erfindung liegt die Aufgabe zugrunde, kostengünstige und anwenderfreundliche "selbstkoordinierende" kombinierte Starter zu schaffen.

Diese Aufgabe wird durch die im Kennzeichen des Anspruchs 1 angegebenen Merkmale gelöst. Weiterbildungen sind in den Unteransprüchen gegeben.

Die Erfindung hat den Vorteil, daß der kombinierte Starter aus gleichartigen Schaltgeräten aufgebaut ist und somit die Verwendung weniger verschiedener Teile möglich ist. Eine Koordination verschiedener Geräte zu einem Gerätesystem, wie es bei den bisher bekannten kombinierten Startern erforderlich ist, entfällt, da der erfindungsgemäße Starter als ein komplettes Schaltgerät aufgebaut werden kann. Die Steuerung und Überwachung der Schütze mit einer intelligenten Leistungselektronik ("Smart Power Device") ersetzt die herkömmlichen Auslöser wie Bimetallrelais und Schnellauslöser und umgeht die aufwendigen Konstruktionen, die eine Kurzschlußstromauslösung ermöglichen. Ein weiterer Vorteil der elektronischen Überlastüberwachung ist durch die großen Einstell- und Einsatzbereiche dieser Auslöser gegeben.

Anhand des in der Zeichnung dargestellten Ausführungsbeispieles soll die Erfindung näher erläutert werden.
- Fig. 1: zeigt als Blockschaltbild den schematischen Aufbau des Motorstarters und seine Anbindung an Verbraucher und Netz.
- Fig. 2: zeigt ein Funktionsschaltbild des Motorsstartes.
- Fig. 3: zeigt den Motorstarter in geschnittener Draufsicht.
- Fig. 4: zeigt die Auslösekennlinien der elektronischen Überstromauslöser.

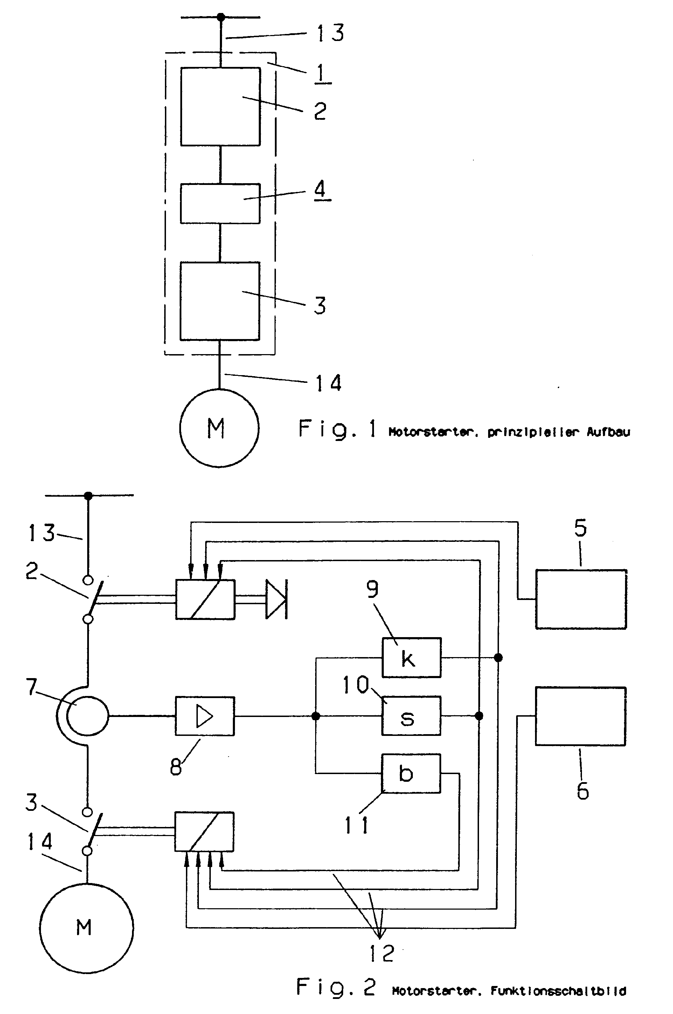

Der in Fig. 1 dargestellte Motorstarter 1 besteht aus aus einem netzseitigen Schütz 2 und einem dazu in Reihe geschalteten lastseitigen Schütz 3. Zwischen den beiden Schützen ist die elektronische Meß-, Steuer- und Überwachungseinheit 4 eingefügt. Der netz- und lastseitige Anschluß erfolgt über die Anschlüsse 13 und 14.

Fig. 2 zeigt, daß die elektronische Meß-, Steuer- und Überwachungseinrichtung 4 , die aus der Meßwerterfassung 7, der Meßwertaufbereitung 8, sowie aus den elektronischen b-, s- und k-Auslösern 9, 10 und 11 besteht, die über Steuerleitungen 12 auf die Schütze 2 und 3 einwirken. Die EIN-/Aus-Funktion des Starters wird über die Betätigungseinheit 5 ausgeführt, die auf Schütz 2 wirkt. Mit der Betätigungseinheit 6 wird in Verbindung mit Schütz 3 die Betriebssteuerung des Motors ausgeführt. Der b-Auslöser 11, der auf eine thermische Überlastung des Motors reagiert, wirkt nur auf Schütz 3. Die s- und k-Auslöser 9 und 10 wirken auf beide Schütze 2,3. So wird bei einer Überlastung, die zu einer Schnell- oder Kurzschlußstromauslösung führt, an beiden Schützen 2, 3 gleichzeitig die Kontakttrennung eingeleitet. Dazu müssen die Schütze 2, 3 annähern gleiche Abhebeströme ausweisen, die durch Merkmale der baulichen Ausführung der einzelnen Schütze 2, 3 bestimmt sind.

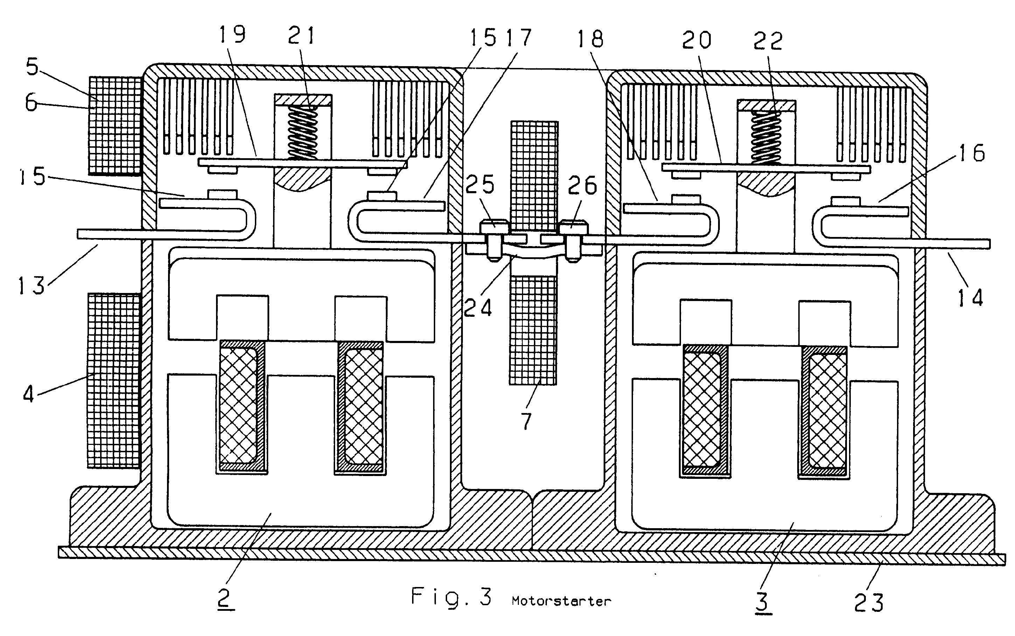

Fig. 3 zeigt, daß die feststehenden Kontaktträger 15, 16, 17, 18 die Form eines U besitzen. Dadurch wird die elektrodynamische Abstoßung der beweglichen Kontaktbrücken 19, 20 gegen die Kraft der Polfedern 21, 22 ermöglicht, wenn ein starker Strom, wie eine Kurzschlußüberstromstärke in dem Starterkreis fließt. Die Schütze 2 und 3 sind übereinander auf einer Grundplatte 23 angeordnet. Die Reihenschaltung der Schütze erfolgt durch eine mechanische, elektrisch leitende Verbindung 24 der Anschlüsse 25, 26 der festen Kontaktträger 17, 18. Die Verbindung 24 nimmt gleichzeitig den Meßwertaufnehmer 7 der Einheit 4 auf. Die elektronische Meß-, Steuer- und Überwachungseinheit (4) kann als "Smart Power Device" ausgeführt in beliebiger Weise an einer geeigneten Stelle einer Außenwand des Motorstarters befestigt sein. Das gilt auch für die Betätigungselemente 5, 6. Fig. 3 zeigt eine Befestigung dieser Bauteile an der Lastseite des Motorstarters (von vorne gesehen).

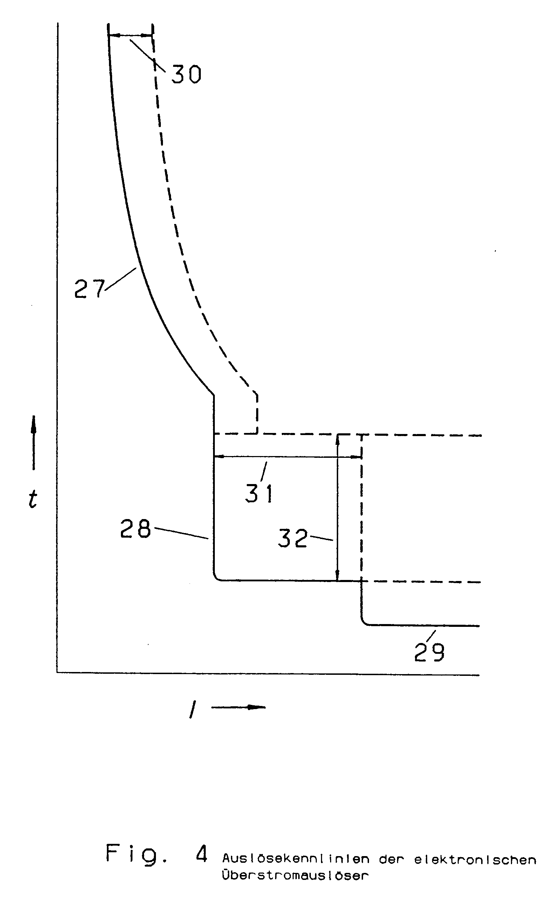

In Fig. 4 sind die Auslösekennlinien der elektronischen Auslöser 9, 10 und 11 gezeigt. Dabei sind die für elektronische Auslöser gegebenen Möglichkeiten der Variation der Einstellwerte aufgezeigt. Die Kennlinien der b-, s- und k-Auslöser sind der Reihenfolge nach mit 27, 28 und 29 bezeichnet. Der Einstellbereich des b-Auslösers ist mit 30 bezeichnet. Beim s-Auslöser kann der Strom-Einstellbereich 31 und die Zeitverzögerung 32 variiert werden.

Die Erfindung ist mit entsprechend angepaßten Schützen in ein- und mehrphasigen Starterkreisen einsetzbar.

## Patentansprüche

1. Motorstarter zum Ingang- und Stillsetzen von Elektromotoren bestehend aus in Reihe geschalteten Schaltgeräten und Betätigungselementen, dessen Überlastschutz sich auf den Schutz gegen Überlast- und Kurzschlußströme erstreckt, **dadurch gekennzeichnet,** daß zwei Schütze (2, 3) zusammen mit einer elektronischen Meß-, Steuer- und Überwachungseinheit (4) in Reihe geschaltet sind, wobei die Schütze (2, 3) annähernd gleiche Abhebeströme aufweisen, daß das Überwachungssystem der Einheit (4) elektronische Auslöser (9, 10, 11) für den Motorschutz und Kurzschlußschutz enthält und daß das Steuersystem der Einheit (4) in Zusammenwirkung mit einem ersten (9) und einem zweiten (10) der Auslöser (9, 10, 11) beim Auftreten von Überlast- oder Kurzschlußströmen ein gleichzeitiges Schnellabschalten der beiden Schütze (2, 3) innerhalb einer Fehlerstromhalbwelle bewirkt und daß die beiden Schütze (2, 3), die elektronische Meß-, Steuer- und Überwachungseinheit (4) und die Betätigungselemente (5, 6) eine fertig montierte Baueinheit bilden.

2. Motorstarter nach Anspruch 1, **dadurch gekennzeichnet,** daß die elektronische Meß-, Steuer- und Überwachungseinheit (4) als "intelligente" Leistungselektronik in integrierter Technik, auch "Smart Power Device" genannt, ausgeführt ist.

3. Motorstarter nach Anspruch 1 oder 2, **dadurch gekennzeichnet,** daß das netzseitige Schütz (2) in Zusammenwirkung mit dem Betätigungselement (5) die EIN-AUS-Funktion des Starters ausführt und das lastseitige Schütz (3) in Zusammenwirkung mit dem Betätigungselement (6) und einem dritten (11) der Auslöser (9, 10, 11) der Meß-, Steuer- und Überwachungseinheit (4), der den thermischen Überlastschutz des Motors gewährleistet, die Betriebssteuerung des Motors übernimmt.

## Claims

1. Motor starter for the starting and stopping of electric motors consisting of switching apparatus and actuating elements, which are connected in series and the overload protection of which extends to protection against overload currents and short-circuit currents, characterised thereby that two protectors (2, 3) are connected in series together with an electronic measuring, control and monitoring unit (4), wherein the protectors (2, 3) have approximately the same cut-off currents, that the monitoring system of the unit (4) comprises electronic triggers (9, 10, 11) for the motor protection and short-circuit protection and that the control system of the unit (4) effects, in cooperation with a first one (9) and a second one (10) of the triggers (9, 10, 11) and on occurrence of overload currents or short-circuit currents, a simultaneous rapid cut-out of the two protectors (2, 3) within a fault current half wave and that the two protectors (2, 3), the electronic measuring, control and monitoring unit (4) and the actuating elements (5, 6) form a ready-assembled constructional unit.

2. Motor starter according to claim 1, characterised thereby that the electronic measuring, control and monitoring unit (4) is executed as an "intelligent" power electronic device by integrated technology, also known as "Smart Power Device".

3. Motor starter according to claim 1 or 2, characterised thereby that the protector (2) at the mains side in co-operation with the actuating element (5) performs the ON/OFF function of the starter and the protector (3) at the load side in co-operation with the actuating element (6) and a third one (11) of the triggers (9, 10, 11) of the electronic measuring, control and monitoring unit (4), which ensures the thermal overload protection of the motor, takes charge of the operating control of the motor.

## Revendications

1. Démarreur de moteur pour la mise en mouvement et la mise à l'arrêt de moteurs électriques, constitué de dispositifs de commutation et d'éléments d'actionnement mis en circuit en série, dont la protection contre la surcharge s'étend sur la protection contre la surcharge et des courants de court-circuit, caractérisé en ce que deux contacteurs-disjoncteurs (2, 3), ensemble avec une unité (4) de mesure, de commande et de surveillance, électronique, sont mis en circuit en série, les contacteurs-disjoncteurs (2, 3) présentant des courants de soulèvement à peu près identiques, en ce que le système de surveillance de l'unité (4) contient des déclencheurs (9, 10, 11) électroniques pour la protection du moteur et la protection contre le court-circuit, en ce que le système de commande de l'unité (4), en coopération avec un premier (9) et un deuxième (10) des déclencheurs (9, 10, 11), lors de l'apparition de courants de surcharge ou de courants de court-circuit, effectuent en même temps une mise hors circuit rapide des deux contacteurs-disjoncteurs (2, 3), à l'intérieur d'une demi-onde de courant de défaut, et en ce que les deux contacteurs-disjoncteurs (2, 3), l'unité (4) de mesure, de commande et de surveillance, et les éléments d'actionnement (5, 6) forment une unité prête à être montée.

2. Démarreur de moteur selon la revendication 1, caractérisé en ce que l'unité (4) de mesure, de commande et de surveillance, électronique, est exécutée comme électronique de puissance "intelligente" en technique intégrée, aussi nommée "Smart Power Device".

3. Démarreur de moteur selon la revendication 1 ou la revendication 2, caractérisé en ce que le contacteur-disjoncteur (2) côté du réseau, en coopération avec l'élément d'actionnement (5), exécute le fonctionnement de mise en service/mise hors service du démarreur, et le contacteur-disjoncteur (3) du côté de la charge, en coopération avec l'élément d'actionnement (6) et un troisième (11) des déclencheurs (9, 10, 11) de l'unité (4) de mesure, de commande et de surveillance, qui garantit la protection contre une surcharge thermique du moteur, prend en charge la commande d'exploitation du moteur.
